# EUROPEAN PATENT APPLICATION

(11) **EP 1 707 455 A2**
(43) Date of publication of application: **04.10.2006**
(21) Application number: 06004140.7
(22) Date of filing: 01.03.2006
(51) Int. Cl.: B60R 22/44

(54) **Seatbelt retractor, seatbelt apparatus, and motor vehicle having a seatbelt apparatus**

(30) Priority: 31.03.2005 JP 2005105419
(71) Applicant: TAKATA CORPORATION, Minato-ku, Tokyo 106-8510 (JP)
(72) Inventor: Takao, Masato, Tokyo 106-8510 (JP); Tanaka, Koji, Tokyo 106-8510 (JP); Inuzuka, Koji, Tokyo 106-8510 (JP)
(74) Representative: Vossius & Partner

(57) **Abstract**

In order to provide effective technology to increase reliability relevant to power transmission releasing operation for a power transmission mechanism, the seatbelt retractor has a configuration for switching the states between a power transmitting state for transmitting a power of an electric motor to a spool via a clutch-type power transmission mechanism and a power transmission released-state in which the power transmitting state is released, by rotating the electric motor. The seatbelt retractor 1 of the seatbelt apparatus mounted on the motor vehicle is configured such that when the power transmission releasing operation is performed, the power transmitting state is judged on the basis of the motor load information of the motor 32 detected by the motor-current detection meter 69, and the power transmission releasing operation is performed on the basis of the judged result( Fig. 2).

## Description

The present invention relates to a technology for structuring a seatbelt retractor mounted on a motor vehicle.

Hitherto, a seatbelt apparatus configured to protect an occupant seated on a motor vehicle seat by a seatbelt (webbing) keeping the occupant under restraint is known. For example, in below mentioned PCT Japanese Translation Patent Publication No. 2003-507252 (Patent Document 1), in a seatbelt apparatus, a configuration of a seatbelt retractor for performing retracting operation and withdrawing operation of the seatbelt by rotating a spool (retracting shaft) by an electric motor is disclosed.
Further, the seatbelt retractor having a configuration for switching power transmitting states from a power transmitting state in which a power of the electric motor is transmitted to the spool via a clutch-type power transmission mechanism by rotating the electric motor, to a power transmission released-state in which the power transmitting state is released and vice versa is known.

When the aforementioned seatbelt retractor is designed, there is a high demand for increasing reliability at a time of releasing operation for power transmitting operation, while paying attention to a power transmitting state of the power transmission mechanism. In particular, in a case when the power transmitting state of the power transmission mechanism is uncertain at a time of power transmission releasing operation, there is a problem such as that even though the power transmission mechanism is already in a released-state, unnecessary rotation of the motor is performed because of the continuous power transmission releasing operation thereby resulting in occurring a noise.
Accordingly, the present invention is made in light of the above-described problems, and the object of the present invention is to provide an effective technology for increasing reliability with respect to the power transmission releasing operation of the power transmission mechanism in the seatbelt retractor having a configuration for switching the power transmitting states from the power transmitting state in which power of the electric motor is transmitted to a spool via a clutch-type power transmission mechanism by rotating the electric motor, to a power transmission released-state in which the power transmitting state is released, and vice versa.

To solve the aforementioned problems, the present invention is made. The present invention is typically applicable for a seatbelt retractor mounted on automobiles, however, the present invention can be applied to a structuring technology for a seatbelt retractor mounted on motor vehicles other than the automobile.

Accordingly, the first invention of the present invention for solving the aforementioned problems is that of a seatbelt retractor according to Claim 1.
The seatbelt retractor claimed in Claim 1 is composed of, at least a spool, an electric motor, a detection device, a power transmission mechanism, and a control device.
The spool of the present invention serves as a member to perform a retracting operation and a withdrawing operation for a seatbelt. The seatbelt being retracted and withdrawn by the seatbelt retractor is a lengthy belt worn by an occupant seated on the motor vehicle seat and is sometimes called "webbing". Typically, it is intended to protect the occupant seated on the motor vehicle seat by keeping the occupant under restraint by the seatbelt when the occupant encounters a crash of the motor vehicle.
The detection device of the present invention is configured to serve as a device for detecting information relevant to a motor load of the electric motor of the present invention. Here, the "information relevant to a motor load" may be the motor load per se, or the information relevant to the motor load. Typically, the motor load is led by detecting the motor-current value.

The power transmission mechanism of the present invention is configured to serve as a mechanism that enables the spool to perform retracting operation and withdrawing operation by transmitting power of the electric motor of the present invention.
The control device of the present invention performs control operation for the electric motor to rotate in a power transmission judging mode when a power transmission releasing operation is performed, and judges a transmitting state of the power transmission mechanism on the basis of the information detected by the detection device when performing the control operation for the electric motor to rotate. In addition, when the control device judges the power transmission mechanism to be in the power transmitting state, the control device performs control operation for the electric motor to rotate in a direction of a power transmission releasing state so as to release the power transmitting state, and when the control device judges the power transmission mechanism to be in the power transmission released-state, the control device performs control operation for the power transmission mechanism to keep the power transmission released-state. Further, the power transmitting state of the power transmission mechanism in the present invention includes one or more than one transmitting state. Accordingly, in the present invention, when the power transmission mechanism is in the predetermined state, and as a result of the electric motor being controlled to rotate in the power transmission releasing direction, the power transmission mechanism may move into a state in which the predetermined power transmitting state is released and the power transmission per se is released (a state in which the power transmission to the spool is cutoff), or may move into another power transmitting state in which the predetermined power transmitting state is released. The control device is typically configured to include a CPU (Central Processing Unit), an input and output device, a memory device, a peripheral device, and the like.

According to a configuration of the seatbelt retractor claimed in Claim 1, the control device judges the transmitting state of the power transmission mechanism when performing the clutch releasing operation, and the control device can perform a clutch releasing operation in a desired mode, which is appropriate for the transmitting state of the power transmission mechanism, by starting the clutch releasing operation in a best mode on the basis of the detected result. Accordingly, it is prevented that the electric motor is controlled to be rotating even when the clutch is already in the state of being turned off (in the state of power transmission cutoff mode) and the noise caused by unnecessary rotation of the electric motor is prevented from occurring.

The second invention of the present invention for solving the aforementioned problems is that of a seatbelt retractor claimed in Claim 2.
The seatbelt retractor claimed in Claim 2 is composed of, at least the spool, the electric motor, the detection device, the power transmission mechanism, and the control device.
The spool, the electric motor, the detection device, and the power transmission mechanism of the present invention have a similar configuration as that of the spool, the electric motor, the detection device, and the power transmission mechanism of Claim 1.

The control device of the present invention has a function to switch the states of the power transmission mechanism among a first power transmitting state, a second power transmitting state, and a power transmission cutoff state, and releases the first power transmitting state by performing a control operation for the electric motor to rotate in a first rotating direction, and releases the second power transmitting state by performing a control operation for the electric motor to rotate in a second rotating direction that is contrary to the first rotating direction. The first power transmitting state is determined to be a state in which the spool rotates in a relatively high speed and by low torque, and the second power transmitting state is determined to be a state in which the spool rotates in a relatively low speed and by high torque. In addition, relevant to relativity of the speed and the torque of the spool in a case of a comparison between the first power transmitting state and the second power transmitting state, for example, when the first power transmitting state is set to be a benchmark, the spool rotates at a slower speed and by higher torque in the second power transmitting state than those in the first power transmitting state. Accordingly, in the present invention, in other words, it can be said that the first power transmitting state is a state in which the spool rotates at a predetermined speed and by predetermined torque, and the second state is a state in which the spool rotates at a speed lower than the predetermined speed in the first power transmitting state and by torque higher than the predetermined toque in the first power transmitting state. The control device is typically configured to include a CPU (Central Processing Unit), an input and output device, a memory device, a peripheral device, and the like.

In such a seatbelt retractor, because the transmitting state of the power transmission mechanism is uncertain, it is uncertain whether the power transmission mechanism is in the power transmitting state or not, and even when it is in the in the power transmitting state, it is uncertain that the power transmitting state is the first power transmitting state or the second power transmitting state.
Therefore, in the present invention, particularly, the control device performs control operation for the electric motor to rotate in the transmitting state judging mode when performing the power transmission releasing operation, and judges the transmitting state of the power transmission mechanism on the basis of information detected by the detection device when performing the control operation for the rotation of the electric motor. Further, the control device performs control operation for the electric motor to rotate in the first rotating direction when the control device judges the power transmission mechanism to be in the first power transmitting state. Furthermore, when the control device judges the power transmission mechanism to be in the second power transmitting state, the control device performs the control operation for the electric motor to rotate in the second rotating direction. In addition, when the control device judges the power transmission mechanism to be in the power transmission released-state, the control device keeps the power transmission released-state.

According to the configuration of the seatbelt retractor claimed in Claim 2, the control device judges the transmitting state of the power transmission mechanism when performing the power transmission-releasing operation, and by using the configuration in which the power transmission releasing operation is performed on the basis of the judged result, the reliability of the power transmission mechanism relevant to the power transmission releasing operation is enabled to be increased. In other words, the seatbelt retractor is configured such that only when the power transmission mechanism is in the power transmitting state, the releasing operation is performed and when the power transmission mechanism is already in the power transmission released-state, the power transmission releasing operation is not performed, hence the problem of occurrence of the noise due to unnecessary rotation of the electric motor relevant to the power transmission releasing operation can be prevented. Further, the releasing operation can be performed in the desired mode that is appropriate for the current power transmitting state when the power transmission mechanism is in the power transmitting state, by configuring the seatbelt retractor to perform the releasing operation after judging whether the power transmitting state is in the first power transmitting state or the second power transmitting state.

The third invention of the present invention to solve the aforementioned problems is the seatbelt retractor claimed in Claim 3.
The power transmission mechanism claimed in Claim 3 is composed of, at least the drive gear at the electric motor side, the driven gear at the spool side, the driven device intervening between the drive gear and the driven gear. In addition, the driven device transmits rotating force of the drive gear to the driven gear and configured to invert rotating directions (i.e., rotating direction of the normal rotation or that of the reversed rotation) of the driven gear when the drive gear rotates in the predetermined direction, to each other between in the first power transmitting state and in the second power transmitting state. The driven device is configured by appropriately setting the number of components and the disposition after combining components such as various kinds of gears and various kinds of connectors and the like.
According to the seatbelt retractor claimed in Claim 3, the reliability relevant to the power transmission releasing operation of the power transmission mechanism can be increased in the configuration of the power transmission mechanism composed of, at least the drive gear at the electric motor side, the driven gear at the spool side, and the driven device intervening between the drive gear and the driven gear.

The forth invention of the present invention to solve the aforementioned problems is a seatbelt apparatus claimed in Claim 4.
The seatbelt apparatus claimed in Claim 4 is composed of, at least the seatbelt and the seatbelt retractor claimed in Claims 1 through 3.
The seatbelt of the present invention is a lengthy belt worn by an occupant seated on a motor vehicle seat and is sometimes called webbing. Typically, it is intended to protect the occupant seated on the motor vehicle seat by keeping the occupant under restraint by the seatbelt when the occupant encounters a crash of the motor vehicle.
According to such a configuration of the seatbelt apparatus claimed in Claim 4, the seatbelt apparatus having increased reliability relevant to a power transmission releasing operation of the seatbelt retractor is provided.

The fifth invention of the present invention to solve the aforementioned problems is a motor vehicle having the seatbelt apparatus claimed in Claim 5.
The motor vehicle having the seatbelt apparatus claimed in Claim 5 is a motor vehicle in which the seatbelt apparatus of the Claim 4 is stored in a storage space therein, such as for example, the storage space in a pillar, the storage space in a seat, or the storage space at another portion in the motor vehicle.
According to the thus described configuration, the motor vehicle having a configuration in which the seatbelt apparatus with increased reliability relevant to the power transmission releasing operation of the seatbelt retractor is stored in the storage space in the motor vehicle is provided.

According to the present invention described above, particularly regarding a structure of the seatbelt retractor, an effective technology to increase the reliability relevant to the power transmission releasing operation of the power transmission mechanism is provided by a configuration in which when the power transmission releasing operation is performed, the power transmission releasing operation is performed by judging the transmitting state of the power transmission mechanism on the basis of the information of the motor load of the electric motor detected by the detection device.

FIG. 1 is a drawing illustrating a configuration of a seatbelt apparatus 100 which is one of the embodiments of a seatbelt apparatus of the present invention;
FIG. 2 is a drawing illustrating a configuration around a seatbelt retractor 1 in FIG. 1;
FIG. 3 is a partially exploded perspective view illustrating part of the seatbelt retractor 1 which is one the embodiments of a seatbelt retractor of the present invention;
FIG. 4 is a partially exploded perspective view illustrating remaining part of the seatbelt retractor which is one of the embodiments of the seatbelt retractor of the present invention;
FIG. 5 is a drawing illustrating a state of the seatbelt retractor from which, a locking unit having a return spring and a base frame in examples illustrated in FIGs. 3 and 4 are removed;
FIG. 6 is a drawing illustrating engagement of a clutch gear 43 and a carrier gear 31, and a clutch pawl 49 and ratchet teeth 31c;
FIG. 7 is a drawing explaining a power transmission mode and a power transmission mode switching operation at a power transmission gear mechanism 52, in which (a) is a drawing schematically and partially illustrating a power transmission cutoff mode, (b) is a drawing schematically and partially illustrating a power transmission mode of a low speed-reduction ratio, and (f) is a drawing schematically and partially illustrating the power transmission mode of a high speed-reduction ratio, (c), (d) and (e) are drawings explaining each of the power transmission mode switching operation; and
FIG. 8 is a flowchart illustrating a clutch-releasing process at the seatbelt retractor of the embodiment of the present invention.
Hereinbelow, an embodiment of the present invention will be explained in detail, referring to the drawings. First, referring to FIGs. 1 through 7, one of the embodiments of the present invention will be explained.

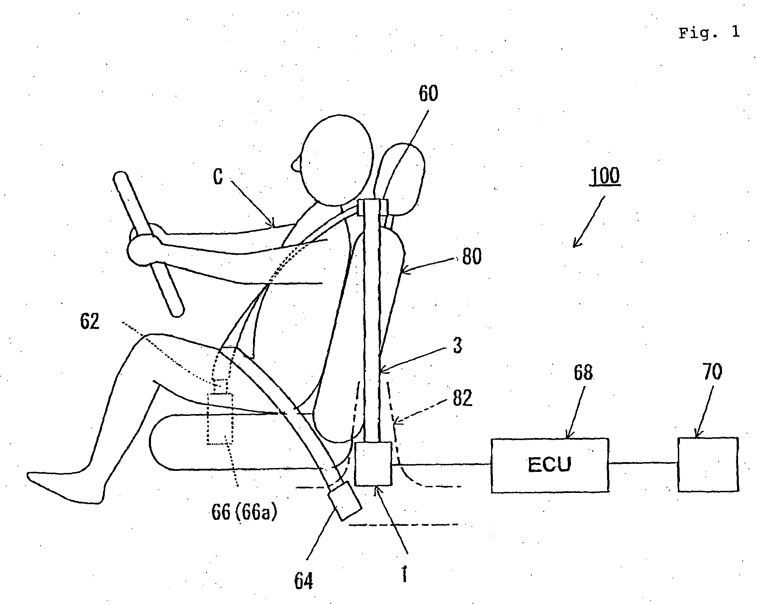

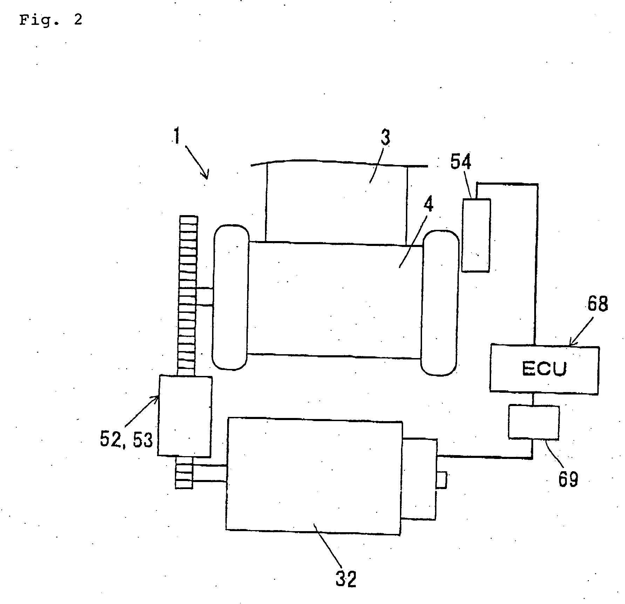

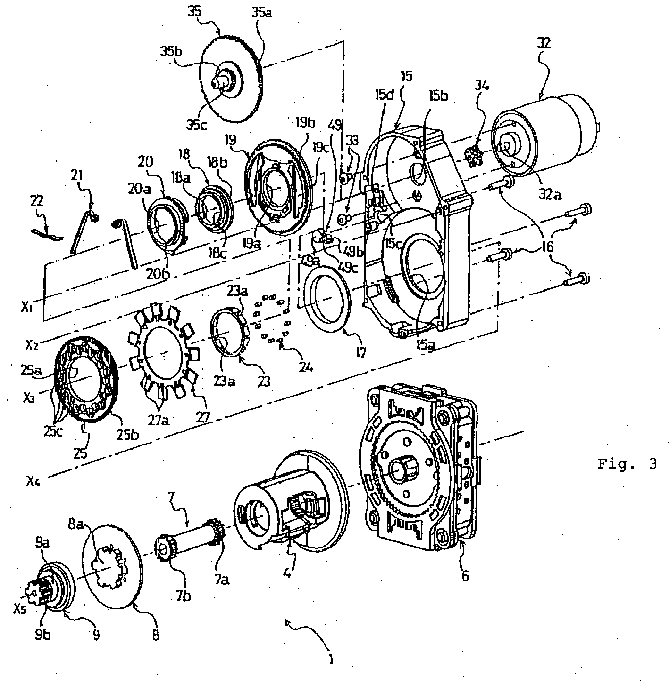

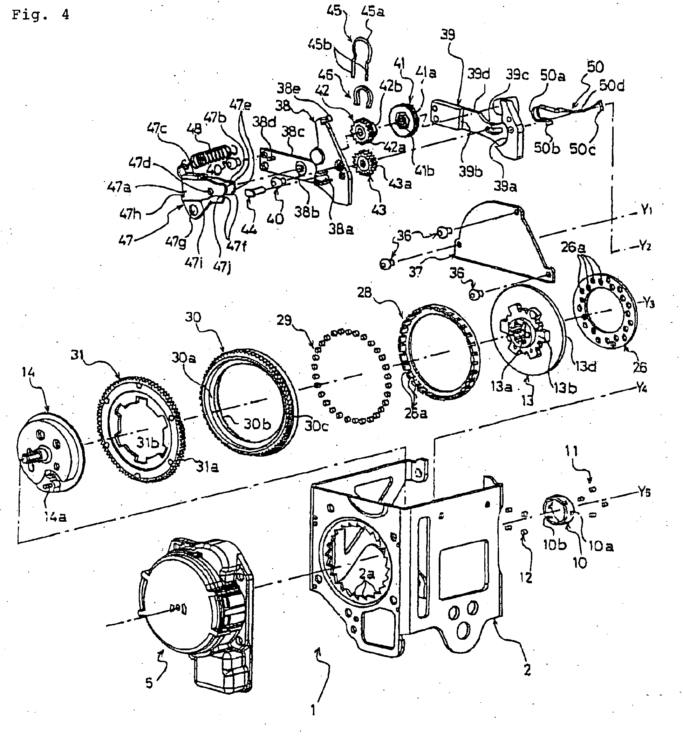

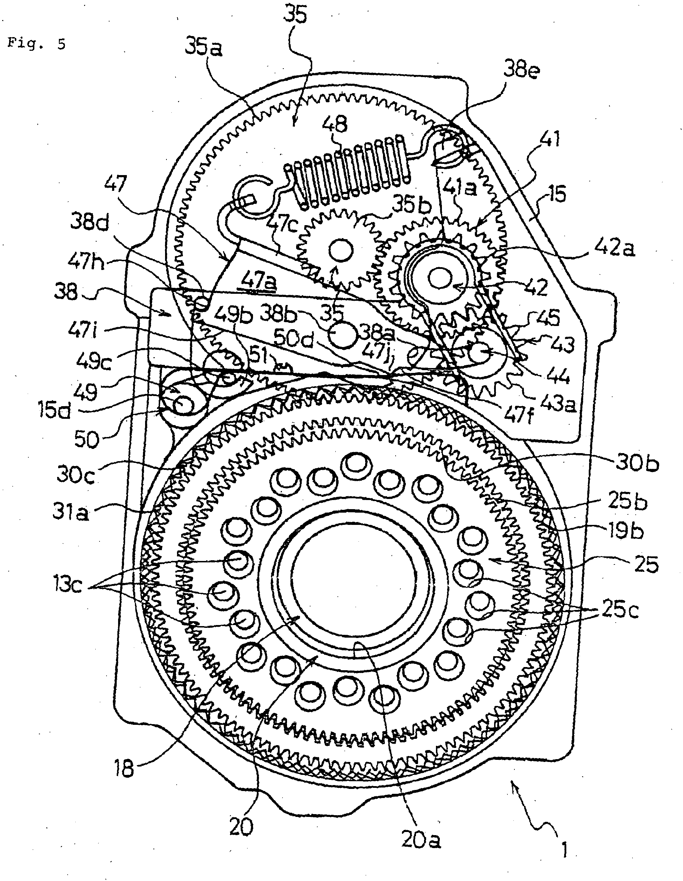

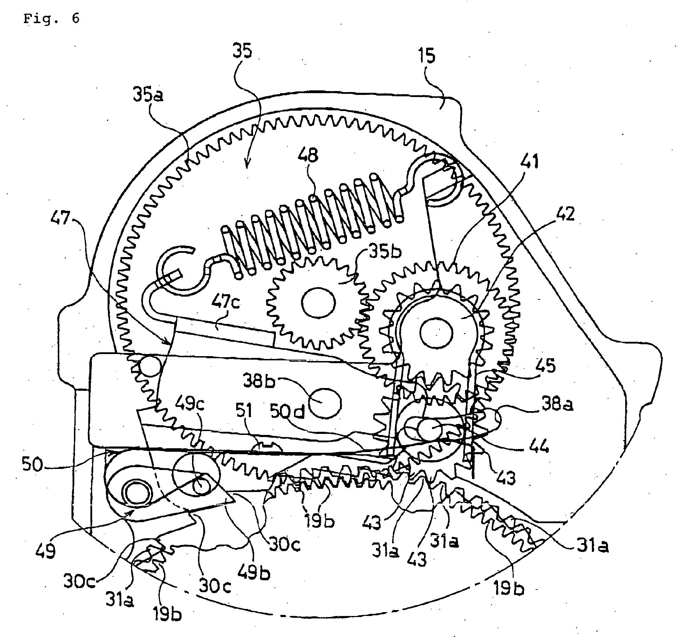

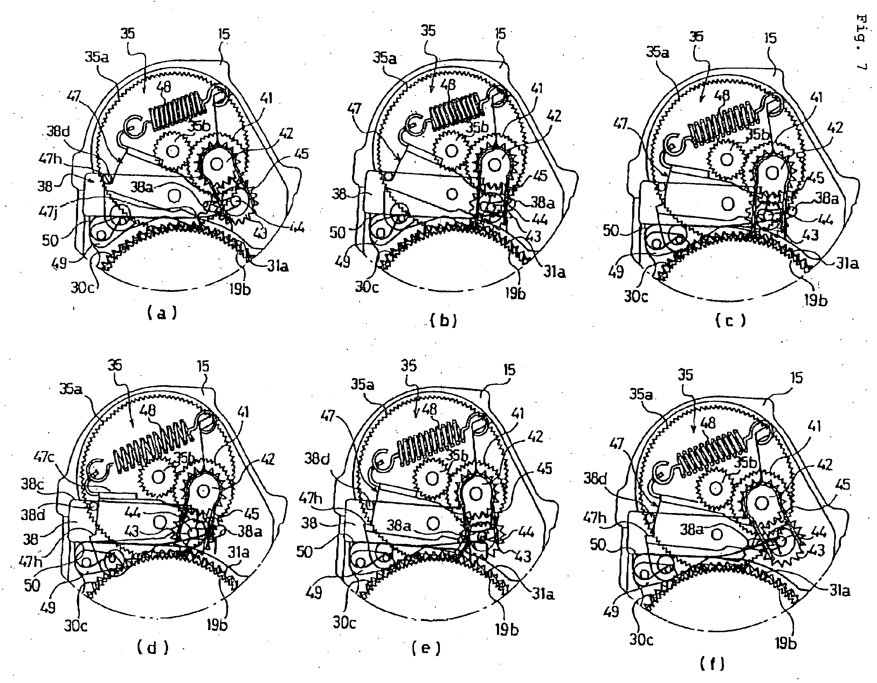

FIG. 1 is a drawing illustrating a configuration of a seatbelt apparatus 100 which is one of the embodiments of a seatbelt apparatus of the present invention, FIG. 2 is a drawing illustrating a configuration around a seatbelt retractor 1 in FIG. 1, FIG. 3 is a partially exploded perspective view illustrating part of the seatbelt retractor 1 which is one the embodiments of a seatbelt retractor of the present invention, FIG. 4 is a partially exploded perspective view illustrating a remaining part of the seatbelt retractor which is one of the embodiments of the seatbelt retractor of the present invention, and FIG. 5 is a drawing illustrating a state of the seatbelt retractor, from which a locking unit having a return spring and a base frame in examples illustrated in FIGs. 3 and 4 are removed. In addition, straight alternate long and short dash lines X1, X2, X3, and X4 in FIG. 3, and Y1, Y2, Y3, and Y4 in FIG. 4 are in alignment with each other, respectively. Thereby, the seatbelt retractor of the embodiment is configured. Further, FIG. 6 is a drawing illustrating respective engagements of a clutch gear 43 and a carrier gear 31, and a clutch pawl 49 and ratchet teeth 30c, and FIG. 7 is a drawing explaining a power transmission mode at a power transmission gear mechanism 52, and a power transmission mode switching operation, in which (a) is a drawing schematically and partially illustrating a power transmission cutoff mode, (b) is a drawing schematically and partially illustrating a power transmission mode of a low speed-reduction ratio, (f) is a drawing schematically and partially illustrating the power transmission mode of a high speed-reduction ratio, and (c), (d) and (e) are drawings explaining each of the power transmission mode switching operations.
In addition, if not otherwise specified, "left" and "right" indicate "left" and "right" in the drawings referred to in the explanation below, and similarly, "clockwise" and "counterclockwise" indicate "clockwise" and "counterclockwise" in the drawings referred to in the explanation below.

As illustrated in FIG. 1, the seatbelt apparatus 100 of the present embodiment serves as a seatbelt apparatus for use in a motor vehicle, mounted on an automobile that is the motor vehicle having the seatbelt apparatus in the present invention, and is mainly composed of a seatbelt retractor 1, a seatbelt 3, an ECU 68, and the like. In addition, on the motor vehicle, an inputting element 70 for detecting various kinds of information such as that relevant to prevision for a crash of the motor vehicle and occurrence of the crash of the motor vehicle, the information relevant to a driving state of the motor vehicle, the information relevant to a seated position of an occupant C, and a physique of the occupant C seated on a seat of the motor vehicle, the information relevant to a circumferential traffic situation, the information relevant to weather and a time zone, and the like, and inputting the detected information into the ECU 68, is mounted. The detected information of the input element 70 is transmitted to the ECU 68 constantly or at each of a predetermined time and is used for performing controlling operation for the seatbelt apparatus 100.

The seatbelt 3 is a lengthy belt (webbing) used for keeping the occupant C seated on the motor vehicle seat 80 (corresponding to "a seat" in the present invention) under restraint, or for releasing the occupant C from the restraint. The seatbelt 3 corresponds to "the seatbelt" in the present invention. The seatbelt 3 is withdrawn from a seatbelt retractor 1 attached to the motor vehicle and connected to an out-anchor 64 via a shoulder anchor 60 provided in a shoulder region of the occupant C, and passing through a tongue 62. The shoulder guide anchor 60 has a function to hook and guide the seatbelt 3 in the shoulder region of the occupant C. Further, the seatbelt 3 is brought to a state to be worn by the occupant C when the tongue 62 is inserted into a buckle 66 attached to the motor vehicle. Further, a buckle switch 66a is embedded in the buckle 66 and the buckle switch 66a detects that the tongue 62 is inserted into the buckle 66 (substantially, the seatbelt 3 is brought to a state to be worn by the occupant C).

The seatbelt retractor 1 is an apparatus that enables the seatbelt 3 to be retracted or withdrawn by a spool 4, to be described later, corresponding to "a seatbelt retractor" of the present invention. The retractor 1 is mounted on a place in a storage space in a B-pillar 82 of the motor vehicle as an example, shown in FIG. 1.

The ECU 68 has a function for performing control operation relevant to various operating mechanisms, such as the seatbelt retractor 1 or the like, and is composed of a CPU (Central Processing Unit), input/output devices, memories, peripheral devices, and the like. Specifically, in the explanation of the present embodiment, the ECU 68 performs the control operation relevant to a motor 32 of the seatbelt retractor, to be described later. In concrete terms, the ECU 68 controls the amount of the passage of electric current through a magnetic coil of the motor 32 and a direction of the passage of electric current, and accordingly, a rotation speed of a motor shaft or the rotating direction thereof is made variable. The ECU 68 corresponds to a "control device" of the present invention.

Further, as shown in FIG. 2, a detecting sensor 54 that directly detects information relevant to a rotation of the spool 4 is mounted on a portion in the seatbelt retractor 1. In the present embodiment, the ECU 68 performs control operation for the motor 32 on the basis of the information detected by the detecting sensor 54. As information detected by the detecting sensor 54, existence or absence of rotation of the spool 4, a rotating angle, a rotating direction, a rotating speed, an amount of rotation and the like can be appropriately used. As the detecting sensor 54, sorts of sensors, such as a hole sensor, a volume, a photointerrupter and the like can be arbitrarily used. In addition, driving operation of the motor 32 of the present embodiment is controlled by the ECU 68 on the basis of an electric current value of the motor 32 detected by a motor-current detection meter 69. The power of the motor 32 is transmitted to the spool 4 through the power transmission gear mechanism 52 and a power transmission mode switching mechanism 53, to be described later.

Next, a detailed configuration of the seatbelt retractor 1 of the present embodiment will be explained.
As shown in FIGs. 3 and 4, the seatbelt retractor 1 is provided with a groove-shaped base frame 2, and in the base frame 2, the spool 4 for retracting the seatbelt 3 to keep the occupant C under restraint is rotatably provided. In addition, a locking unit 5 having a return spring composed of a locking mechanism that prevents the spool 4 from being rotated in a belt withdrawing direction α by the operation of the locking mechanism performed when the speed of the motor vehicle is reduced in an amount more than the predetermined amount of the speed reduction of the motor vehicle caused by the crash of the motor vehicle or the like, and a spring mechanism provided in the spool 4, which constantly keeps the seatbelt 3 under tension in a belt-retracting direction is disposed at an outside of one side of the base frame 2. As the above-described locking mechanism and the spring mechanism, heretofore known mechanisms are adopted.

A pre-tensioner 6 is disposed at an outside of the base frame 2 at an opposite side of the locking unit 5 having a return spring, and is configured to remove a slack of the seatbelt 3 between the spool 4 and the occupant C by retracting the seatbelt (the seatbelt 3 in FIGs. 1 and 2) by rotating the spool 4 in a belt-retracting direction β, operating when the high speed-reduction of the motor vehicle occurs.

A torsion bar 7 is provided in a concentric manner with the spool 4 penetrating through the same and one end portion 7a of the torsion bar 7 is fit into the spool 4 by a spline-fitting in a manner so as to be integrally rotatable with the spool 4. The other end portion 7b of the torsion bar 7 is fit into a fitting portion (not shown) (provided at a face of a side of the other end portion 7b of the torsion bar 7 in FIG. 3, in a concentric manner with the torsion bar 7) of a disk-shaped connector 8 by the spline-fitting in a manner so as to be integrally rotatable with the connector 8. At a face of the connector 8 opposite to a side of the torsion bar 7, a spline shaft 8a is disposed in a concentric manner with the torsion bar 7, and the spline shaft 8a is fit into a spline groove hole (not shown) of a connecting member 9 (provided at a face of a side of the spline shaft 8a in FIG. 3 in a concentric manner with the torsion bar 7) in a manner so as to be integrally rotatable with the connecting member 9.

Further, at a face opposite to a side of the connector 8 of the connecting member 9, a cylindrical portion 9a is disposed in a concentric manner with the torsion bar 7 and a ring-shaped first separator 10 is fit into the cylindrical portion 9a. At a plurality of (four in number in the example of the drawing) grooves 10a disposed at one side of the first separator 10 in the shaft direction, the same number of bearing pins 11 are respectively fit in a rotatable manner and at a plurality of (four in number) grooves 10b disposed at the other side of the first separator 10 in the shaft direction, the same number of bearing pins 12 are respectively fit in a rotatable manner. By means of the bearing pins 11 and 12, the first separator 10 is configured to be relatively rotatable to the cylindrical portion 9a. A spline shaft portion 9b is provided in the connecting member 9 continuously to the cylindrical portion 9a in a concentric manner with the torsion bar 7 and the spline shaft portion 9b is fit into a spline groove portion 13a provided at an internal face of a ring plate-shaped carrier 13 in a concentric manner with the torsion bar 7. As a result, the connecting member 9 and the carrier 13 are configured to be integrally rotatable.

At a face of the carrier 13 opposite to a side of the torsion bar 7, a spline shaft 13b is provided in a concentric manner with the torsion bar 7 and the spline shaft 13b penetrates a spline groove hole 31b, to be described later, in a manner so as to be integrally rotatable with the spline groove hole 31b of the carrier gear 31. Further, the spline shaft 13b is fit into a spline groove hole (not shown) (provided at a face of a side of the spline shaft 13b in FIG. 4 in a concentric manner with the torsion bar 7) of a locking base 14 of the locking mechanism of the locking unit 5 having a return spring in a manner so as to be integrally rotatable with the spline groove hole. As the locking base 14, the same one that is heretofore known is adopted. Further, a pawl 14a swingably supported by a pawl supporting portion of the locking base 14 engages with a tooth 2a of the base frame 2 by being swung when the locking mechanism is operated, and thereby, a rotation of the locking base 14 in a belt withdrawing direction is , configured to be prevented. Accordingly, impact energy received by the occupant C from the seatbelt (the seatbelt 3 in FIGs. 1 and 2) caused by inertia is absorbed and eased by a deformation caused by torsion of the torsion bar 7 when the locking mechanism is operated.

A retainer 15 is attached with four attaching screws 16, to an inside of an opposite side of the base frame 2, at which the pre-tensioner 6 is provided. A ring-shaped retainer bearing 17 is fit into and attached to a hole 15a of the retainer 15 having a large diameter. A cylindrical portion 9a of the connecting member 9 is rotatably supported by the retainer bearing 17.

An internal peripheral face 18a of a ring-shaped center member 18 is fit into an outer periphery of the first separator 10 by the bearing pins 11 and 12 in a relatively rotatable manner. The center member 18 is attached to a gear 19 because a step portion 18b of the center member 18 is engaged with picks 19a disposed at three positions of the gear 19. Circularly aligned external teeth 19b are formed around the gear 19 and a guide portion 19c for movably holding a sun gear 20, to be described later, while guiding the sun gear in a radial direction (a state of the above and below direction, shown in FIG. 3) is provided in the gear 19.

A second peripheral face 18c of the center member 18 is fit into a center hole 20a of the ring-shaped sun gear 20. In this case, a diameter of the center hole 20a is set to be greater than that of the second peripheral face 18c and the sun gear 20 is provided in an eccentric manner relative to the second peripheral face 18c, namely, an eccentric manner relative to the external teeth 19b of the gear 19. Further, the sun gear 20 is supported by the guide portion 19c of the gear 19 in a relatively movable manner in a radial direction. Consequently, the center member 18, the gear 19 and the sun gear 20 are configured to be integrally rotatable, and the sun gear 20 is provided in a manner so as to be relatively movable relative to the gear 19 in a radial direction (in the above and below direction in FIG. 3). A pair of springs 21 and a receive spring 22 are provided between the gear 19 and the sun gear 20 and thereby, the movement of the sun gear 20 relative to the gear 19 in the radial direction is limited by the pair of springs 21.

An outer peripheral face 20b of the sun gear 20 is fit into a second separator 23. In this case, the plural number (12 in number in the example, shown in the drawing) of grooves 23 are formed in the shaft direction at one side of the second separator 23 and the same number of bearing pins 24 as that of the grooves 23 are respectively fit thereinto in a rotatable manner. The second separator 23 is configured so as to be rotatable relative to the outer peripheral face 20b of the sun gear 20 by the bearing pins 24. In addition, the second separator 23 is fit into a center hole 25a of a circular planet gear 25 in a relatively rotatable manner by the bearing pins 24.

At an outer peripheral face of the planet gear 25, external teeth 25b are formed and at a side face of the planet gear 25, the plural number of (twenty two in number in the example, shown in the drawing) holes 25c penetrating the planet gear 25 in the shaft direction are disposed in a zigzag manner in a circumferential direction. Further, a ring-shaped lifter 26 is sandwiched between the carrier 13 and the planet gear 25. At a side face of the lifter 26, holes 26a in the same number of the holes 25c of the planet gear 25, penetrating in the shaft direction are respectively disposed in a zigzag manner in a circumferential direction in a manner so as to be in alignment with respective holes 25c. The planet gear 25 and the lifter 26 are provided such that projection shafts 13c (shown in FIG. 5) that are protruding in a perpendicularly standing manner from a face of an opposite side of the spline shaft 13b of the carrier 13, being in the shaft direction, and corresponding to the holes 25c and the holes 26a are fit into the holes 25c and 26a. In this case, a diameter of each of the holes 25c is set to be greater than that of each of the projection shafts 13c as shown in FIG. 5, and thereby, each of the projection shafts 13c is fit into each of the holes 25c with clearance therebetween in a movable manner relative to the holes 25c. Further, at a face of the planet gear 25 opposite to the carrier 13 side, a circular speed-reduction plate 27 is provided. The speed-reduction plate 27 is riveted to the carrier 13 using the hole 27a and the projection shaft 13c of the carrier 13. As a result, the planet gear 25 and the lifter 26 are sandwiched between the carrier 13 and the speed-reduction plate 27, and the planet gear 25 is decentered from a center shaft of the carrier 13, namely a center shaft of the torsion bar 7.

A peripheral face 13d of the carrier 13 is fit into a third separator 28. In this case, a plurality of bearing pins 29 in the same number (thirty in number in the example, shown in the drawing) of the plurality of grooves 28a formed at one side of the third separator 28 are fit into respective grooves 28a in the shaft direction and in a rotatable manner. The third separator 28 is configured so as to be rotatable relative to the peripheral face 13d of the carrier 13 by the plurality of bearing pins 29. Further, the third separator 28 is fit into a center hole 30a of a circularly shaped internal gear 30 in a manner so as to be relatively rotatable by the bearing pins 29.

Circularly shaped internal teeth 30b are formed at a center hole 30a of the internal gear 30 at a side of the retainer 15. In addition, when the third separator 28 into which the carrier 13 is fit is fit into the center hole 30a, the planet gear 25 is positioned in the circularly shaped internal teeth 30b in an eccentric manner from the center of the circularly shaped internal teeth 30b, and is configured such that part of the external teeth 25b of the planet gear 25 are partially engaged with part of the internal teeth 30b. Further, circularly shaped ratchet teeth 30c are provided at a center hole 30a of the internal gear 30 at a side of the retainer 15.

Adjacent to the internal gear 30 at a side of the locking base 14, circularly-shaped carrier gear 31 is provided in a concentric manner with the internal gear 30, i.e., in a concentric manner with the torsion bar 7. At a peripheral face of the carrier gear 31, external teeth 31a are disposed and spline groove holes 31b are formed at a center portion of the carrier gear 31. Further, the spline shaft 13b of the carrier 13 is penetrated through and engaged with the spline shaft hole 31b. Accordingly, the carrier 13 and the carrier gear 31 are able to be integrally rotatable.

A motor 32 that generates rotation torque applied to the spool 4 is attached to an upper position of the pre-tensioner 6 and at an outside of the retainer 15 by means of attaching screws 33. A motor rotation shaft 32a of the motor 32 intrudes into the retainer 15 penetrating through a penetration hole 15b of the retainer 15 and a rotation transmission member 34 is attached to a portion in the motor rotation shaft 32a located inside the retainer 15 in a manner so as to be integrally rotatable. The rotation transmission member 34 is fit into a fitting portion (not shown) of a disk-shaped motor gear 35 (concentrically provided on a same shaft as the motor rotation shaft 32a at a face of a side of the rotation transmission member 34 in FIG. 3) by means of a spline, in a manner so as to be integrally rotatable.

The motor gear 35 is provided with circularly shaped first external teeth 35a having relatively large diameter, circularly shaped second external teeth 35b having a relatively small diameter, and a rotation shaft 35c. The rotation shaft 35c of the motor gear 35 is rotatably supported by a bearing portion of a retainer cover 37 attached to the retainer 15 by attaching screws 36 (concentrically provided with the rotation shaft 35c at a face of the motor gear 35 side, namely, on the same axis of the motor rotation shaft 32a in FIG. 3). In addition, the first external teeth 35a of the motor gear 35 are engaged with the external teeth 19b of the gear 19 and the second external teeth 35b are engaged with external teeth 41a of a first connecting gear 41, to be described later.

An upper guide plate 38 and a lower guide plate 39 are overlapped with each other and attached to the retainer 15 with an attaching screw 40. In this case, a predetermined clearance is formed in an intermediate portion between the overlapped upper guide plate 38 and the lower guide plate 39 by step portions 39a and 39b attached to the lower guide plate 39. The first connecting gear 41, a second connecting gear 42, and the clutch gear 43 are provided in the predetermined clearance.

The first connecting gear 41 is provided with external teeth 41a at an outer peripheral face thereof and a hexagonal fitting hole 41b at a center portion thereof. The second connecting gear 42 is provided with external teeth 42a having a diameter smaller than that of the external teeth 41a at an outer peripheral face thereof and a hexagonal fitting shaft 42b at a center thereof. Further, the first and the second connect gears 41 and 42 are concentrically combined with each other being provided with a predetermined clearance in an integrally rotatable manner by fitting the fitting shaft 42b of the second connecting gear 42 into the fitting hole 41b of the first connecting gear 41, and are supported by a rotation shaft (not shown) on the upper guide plate 38 and the lower guide plate 39 in a rotatable manner.

The clutch gear 43 has external teeth 43a having the same diameter as that of the external teeth 42a, and the external teeth 42a of the second connecting gear 42 and the external teeth 43a of the clutch gear 43 are engaged with each other. The clutch gear 43 is rotatably supported by the clutch gear shaft 44 and the clutch gear shaft 44 is configured so as to be movable along an arc-shaped guide hole 38a provided in the upper guide plate 38 and an arc-shaped guide hole 39c provided in the lower guide plate 39. Both the guide holes 38a and 39c are aligned in the shaft direction and arcs of both the guide holes 38a and 39c are set to be arcs of circles having a common center serving as a rotation axis of the first and second connecting gears 41 and 42. As a result, the clutch gear 43 is brought to move around an outer periphery of the second connecting gear 42 being rotating on the clutch gear shaft 44 as a center axis, in a state of constantly being engaged with the second connecting gear 42. Further, the clutch gear 43 is configured so as to be engaged with the external teeth 31a of the carrier gear 31 when the clutch gear 43 arrives at a position, shown in FIG. 4 by moving around the outer periphery of the second connecting gear 42.

A U-shaped clutch spring 45 is disposed in the clearance between the first and the second connecting gears 41 and 42. A curved portion 45a of the clutch spring 45 is supported in a relatively rotatable manner by a protruding shaft (not shown) provided on the second connecting gear 42 in a manner so as to be protruding toward the first connecting gear 41 in the shaft direction. Thereby, the clutch spring 45 is rotatable around a rotation axis of the second connecting gear 42 as a rotation center. At this moment, the curved portion 45a is in a state of frictional engagement with the protruding shaft of the second connecting gear 42 at a predetermined frictional force and when relative rotation force between the clutch spring 45 and the second connecting gear 42 exceed the predetermined frictional force, the clutch spring 45 is brought to a state of a relative rotation being sliding with the second connecting gear 42.

A pair of tip end portions 45b of the clutch spring 45 elastically nip a protruding shaft (not shown) provided on the clutch gear 43 in a protruding manner toward the lower guide plate 39 in the shaft direction. Further, a horseshoe-shaped sliding member 46 formed of resin is provided in between the clutch spring 45 and the second connecting gear 42. The sliding member 46 decreases abrasion that occurs when the relative sliding operation between the clutch spring 45 and the second connecting gear 42 is performed and makes the sliding operation stable.

In the upper guide plate 38 and the lower guide plate 39, two side walls 47a and 47b, and a U-shaped clutch arm 47 having a connecting portion 47c for connecting both the side walls 47a and 47b are provided. In this case, the clutch arm 47 is configured in a manner so as to sandwich the upper guide plate 38 and the lower guide plate 39 by two of the side walls 47a and 47b, and supporting shafts respectively protruding on the upper guide plate 38 and the lower guide plate 39 are fit into supporting holes respectively formed in both the side walls 47a and 47b. As a result, the clutch arm 47 is supported on the upper guide plate 38 and the lower guide plate 39 in a relative rotation manner. (In FIG. 4, only a supporting hole 47d of the side wall 47a of one side and a supporting shaft 38b of the upper guide 38 are shown, and the other components are not shown. However, in the explanation described later, numerals 47d and 38b denote the supporting hole and the supporting shaft, respectively, although not shown.)

Further, the clutch gear shaft 44 is capable of contacting each of right ends 47e of both the side walls 47a and 47b of the clutch arm 47. Furthermore, an arc-shaped engaging concave 47f to be engaged with the clutch gear shaft 44 is formed on the right end 47e. Still further, a pawl limiting hole 47g is formed at the side wall 47a of the clutch arm 47. In addition, at the left ends of the side walls 47a and 47b, stopper hooking portions 47h are respectively formed. The stopper hooking portions 47h are configured so as to be capable of contacting the stopper shafts provided in the upper guide plate 38 and the lower guide plate 39 when the clutch arm 47 rotates in a clockwise direction. (In FIG. 4, only a stopper shaft 38d of the upper guide plate 38 is shown and that of the lower guide plate 39 is not shown. However, in the explanation described later, numeral 38d denotes the stopper shaft of the lower guide plate 39, although not shown.)

Between the connecting portion 47c of the clutch arm 47 and a spring supporting portion 38e of the upper guide plate 38, a spring 48 is compressed. The clutch arm 47 is constantly biased in a direction so as to be in a non-operating state, shown in FIG. 5 (initial state), namely, in a clockwise direction by the spring 48. In addition, in the non-operating state (initial state) of the clutch arm 47, shown in FIG. 5, the stopper hooking portion 47h of the clutch arm 47 is held at a position, at which the stopper hooking portion 47h is hooked on a stopper shaft 38d by the spring 48 and a further rotation of the clutch arm 47 in the clockwise direction is thereby prevented. Further, when the clutch arm 47 rotates in a counterclockwise direction in FIG. 6 around the supporting shaft of the upper guide plate 38 and the lower guide plate 39 as a rotation center, being opposed to the biasing force of the spring 48, and the connecting portion 47c of the clutch arm 47 contacts each of top edges 38c and 39d of each of the upper guide plate 38 and the lower guide plate 39 (that is, a state, shown in FIG. 7(d), to be described later), the further rotation of the clutch arm 47 in the counterclockwise direction is thereby prevented.

A clutch pawl 49 is rotatably mounted on the retainer 15. In this case, an arc-shaped supporting portion 49a of one end side of the clutch pawl 49 is rotatably supported by an arc-shaped supporting concave portion 15c of the retainer 15. A hooking pick 49b is formed at the other end side of the clutch pawl 49 and the hooking pick 49b is able to be hooked with the ratchet teeth 30c of the internal gear 30 when being at a position, shown in FIG. 6. In addition, the hooking pick 49b cannot be hooked with the ratchet teeth 30c when being at a position, shown in FIG. 5. Further, a cylindrically shaped projection shaft 49c is provided in the clutch pawl 49, and is provided penetrating a pawl limiting hole 47g of both side walls 47a. As shown in FIG. 3, a diameter of the projection shaft 49c is set to be smaller than that of the pawl limiting hole 47g to some tune, and the projection shaft 49c is configured to be movable within the area of the pawl limiting hole 47g. In other words, the rotation of the clutch pawl 49 is limited by the pawl limiting hole 47g.

Furthermore, a stopper spring 50 is provided in the lower guide plate 39. In this case, as shown in FIG. 5, the stopper spring 50 is attached to the lower guide plate 39 with an attaching screw 51. In addition, an arc-shaped hooking portion 50b positioned at one end side of the stopper spring 50 is hooked by the projection shaft 49c of the clutch pawl 49 and the other end side of the stopper spring 50 is configured to be a guide portion 50c having an angled shape that is angled at approximately 90 degree. Further, a pressing portion 50d is formed between a supporting portion 50a and the guide portion 50c as shown in FIG. 4.

Still further, in the seatbelt retractor 1 assembled in a manner as shown in FIG. 5, when the clutch arm 47 is in a non-operating state, the pressing portion 50d of the stopper spring 50 contacts a corner portion 47j formed at one side wall 47b of the clutch 47. Thereby, the clutch arm 47 is biased in a counterclockwise direction by the pressing portion 50d of the stopper spring 50, and in contrast, a position of the stopper spring 50 is limited to the position, shown in FIG. 5, by the corner portion 47j of the clutch arm 47.

In addition, in the seatbelt retractor 1 of this example, the power transmission gear mechanism 52 for transmitting rotation torque of the motor 32 to the spool 4 is composed of the carrier 13, the center member 18, the gear 19, the sun gear 20, the second separator 23, the planet gear 25, the lifter 26, the third separator 28, the internal gear 30, the carrier gear 31, the motor gear 35, the first connecting gear 41, the second connecting gear 42, the clutch gear 43, the clutch gear shaft 44 and the like.

Further, the power transmission mode switching mechanism 53 for switching the power transmission modes among three of the power transmission modes, to be described later, which is set in the power transmission gear mechanism 52 is composed of the clutch gear 44, the clutch spring 45, the clutch arm 47, the spring 48, the clutch pawl 49, the stopper spring 50, and the like. Furthermore, a speed-reduction mechanism for transmitting a rotation of the motor 32 to the spool 4 in a manner so as to reduce the speed is composed of the power transmission gear mechanism 52 and the power transmission mode switching mechanism 53. The speed-reduction mechanism, or the power transmission gear mechanism 52 corresponds to a power transmission mechanism of the present invention.

Next, the three power transmission modes set in the power transmission gear mechanism 52 will be explained.

### (1) Power Transmission Cutoff Mode

The power transmission cutoff mode is a mode in which the motor 32 is not driven and the power transmission between the spool and the motor 32 is cutoff (a non-operating state, namely, an initial state). In the power transmission cutoff mode, shown in FIG. 7(a) (The state, shown in FIG. 5 is also the power transmission cutoff mode.), the clutch gear shaft 44 at the power transmission mode switching mechanism 53 is set to a position contacting right ends of guide holes 38a and 39c, and the clutch gear 43 is set to a position at which the clutch gear 43 does not engage with the carrier gear 31. As a result, a torque transmission path (a high speed and low torque transmission path, described later) between the clutch gear 43 and the carrier gear 31 is cutoff.

Further, the stopper hooking portion 47h of the clutch arm 47 is held at a position at which the stopper hooking portion 47h is hooked on a stopper shaft 38d by the spring 48. In this state of the clutch arm 47, the pressing portion 50d of the stopper spring 50 is in a state of contacting the corner portion 47j of the clutch arm 47 and the clutch arm 47 is biased in a counterclockwise direction by the pressing portion 50d and the stopper spring 50 is positioned at a position, shown in the drawing, by the clutch arm 47. Furthermore, the projection shaft 49c of the clutch pawl 49 is pressed by an internal peripheral edge of the pawl limiting hole 47g of the clutch arm 47. Therefore, the hooking pick 49b of the clutch pawl 49 is not engaged with the ratchet teeth 30c of the internal gear 30 and the internal gear 30 is released so as to be freely rotatable. Consequently, the torque transmission path (low speed and high torque transmission path, describe later) between the motor gear 35 and the carrier 13 is cutoff. Thus, in the power transmission cutoff mode, the spool 4 and the motor 32 are not connected to each other.

### (2) Low Speed-reduction Ratio Power Transmission Mode

The low speed-reduction ratio power transmission mode is a high speed and low torque transmission mode (a high speed mode) in which the motor 32 rotates in a seatbelt retracting direction (counterclockwise direction) (hereinafter referred to as a normal rotation). As shown in FIG. 7(b), similar to the power transmission cutoff mode, the hooking pick 49b of the clutch pawl 49 is not engaged with the ratchet teeth 30c of the internal gear 30 and the internal gear 30 is released to be freely rotatable. The low speed and high torque transmission path is thereby cutoff.

On the other hand, the clutch gear shaft 44 of the power transmission mode switching mechanism 53 contacts the right end 47e of both side walls 47a and 47b of the clutch arm 47, and the clutch gear 43 is engaged with the carrier gear 31. Accordingly, the clutch gear 43 and the carrier 13 are connected through the carrier gear 31, and the rotation of the motor 32 is transmitted at a reduced speed. However, a high speed and low torque transmission path, in which the speed-reduction ratio is lower than that of the high speed-reduction ratio power transmission mode, described later, is set. That is, the motor 32 is connected to the spool 4 via the motor rotation shaft 32a, the rotation transmission member 34, the second external teeth 35b of the motor gear 35, the first connecting gear 41, the second connecting gear 42, the clutch gear 43, the carrier gear 31, the carrier 13 the connecting member 9, connector 8, and the torsion bar 7. Thus, the low speed-reduction ratio power transmission mode is set. In the low speed-reduction ratio power transmission mode, driving force of the motor 32 is transmitted to the spool at a high speed and by low torque, and the seatbelt 3 can be rapidly retracted.

### (3) High Speed-reduction Ratio Power Transmission Mode

The high speed-reduction ratio power transmission mode is a low speed and high torque transmission mode (A high speed reduction mode means a low speed mode.) in which the motor 32 rotates in a reversed direction (reversed rotation). In the high speed-reduction ratio power transmission mode, the clutch gear 43 is separated from the carrier gear 31, as shown in FIG. 7(e), and the high speed and low torque transmission path is cutoff.

On the other hand, the hooking pick 49b of the clutch pawl 49 is engaged with the ratchet teeth 30c of the internal gear 30 (brought to be a state, clearly shown in FIG. 6), and the internal gear 30 is stopped to be rotated by torque of the motor 32. Accordingly, the gear 19 and the carrier 13 are connected via the sun gear 20 and the planet gear 25, and the rotation of the motor 32 is transmitted to the carrier 13. In this case, the rotation of the motor 32 is converted into a rotation of the planet gear 25 by a planetary composed of the carrier 13, the sun gear 20, the planet gear 25, and the internal gear 30. As a result, the rotation of the motor 32 is transmitted to the carrier 13 at a highly reduced speed, and the speed reduction ratio of the rotation is higher than that of the low speed-reduction ratio power transmission mode, described above. By thus described configuration, the low speed high torque transmission path is set. That is, the motor 32 is connected to the spool 4 via the motor rotation shaft 32a, the rotation transmission member 34, the first external teeth 35a of the motor gear 35, the gear 19, the sun gear 20, the planet gear 25, the carrier 13, the connecting member 9, the connector 8, and the torsion bar 7. Thus, the high speed-reduction ratio power transmission mode is set. In the high speed-reduction ratio power transmission mode, the driving force of the motor 32 is transmitted to the spool 4 at a low speed and by high torque and the seatbelt 3 can be retracted under relatively strong or high belt tension.

Switching operation for switching the power transmission modes among the aforementioned power transmission cutoff mode, the low speed-reduction ratio power transmission mode, and the high speed-reduction ratio power transmission mode is performed by the power transmission mode switching mechanism 53. In this case, the operation of the power transmission mode switching mechanism 53 is performed by the driving force of the motor 32, and the driving force of the motor 32 is controlled by the ECU 68 on the basis of a motor-current value detected by the motor-current detection meter (the motor-current detection meter 69, shown in FIG. 2).

### (4) Power transmission mode switching operation from the cutoff mode to the low speed-reduction ratio power transmission mode

When the motor 32 rotates in a direction of the normal rotation from the state of the power transmission cutoff mode, shown in FIG. 7(a), the normal rotation of the motor 32 is transmitted to the motor gear 35, and the motor gear 35 rotates in a counterclockwise direction. First, the gear 19 rotates in a clockwise direction at a reduced speed by the counterclockwise rotation of the motor gear 35. At this moment, similar to the power transmission cutoff mode, the hooking pick 49b of the clutch pawl 49 is not engaged with the ratchet teeth 30c and thereby, the internal gear 30 is released to be freely rotatable and the low speed and high torque transmission path is cutoff.

On the other hand, the first connecting gear 41 rotates in a clockwise direction at a deduced speed by the counterclockwise rotation of the motor gear 35 via the second external teeth 35b of the motor gear 35. The second connecting gear 42 is also integrally rotated in the same direction as that of the first connecting gear 41 by the rotation thereof, and the clutch spring 45 is also integrally rotated in the same direction as that of the second connecting gear 42 around the rotation shaft of the second connecting gear 42 serving as a rotation center by a frictional engagement with the protruding shaft (not shown) provided on the second connecting gear 42. Thereby, the clutch gear 43 moves in a direction for approaching the carrier gear 31. The moving operation of the clutch gear 43 is performed in a manner such that the clutch gear shaft 44 moves along the guide holes 38a and 39a. In addition, the clutch gear 43 is rotated in a counterclockwise direction by the rotation of the second connecting gear 42 being in engagement with the clutch gear 43.

As shown in FIG. 7(b), when the clutch gear 43 moves and then, the clutch gear shaft 44 contacts the right ends 47e of the both side walls 47a and 47b of the clutch arm 47, the movement of the clutch gear shaft 44 and the clutch gear 43 is stopped. At this moment, because the right ends 47e of the both side walls 47a and 47b are slanting in a direction from the downside left to the upside right in FIG. 7(b), the clutch gear shaft 44 contacting the right end 47e presses the right end 47e in a direction for the clutch arm 47 to be rotated in a counterclockwise direction. However, the force of the clutch gear shaft 44 for pressing the clutch arm 47 is relatively weak at this moment, and the torque caused by this force to rotate the clutch arm 47 in the counterclockwise direction is weaker than that for rotating the clutch arm 47 in the clockwise direction that is caused by the spring 48. Therefore, the clutch arm 47 is not rotated.

Further, the clutch gear 43 is engaged with the carrier gear 31 at this stopping position. Thus, the power transmission mode switching operation of the power transmission gear mechanism 52 from the power transmission cutoff mode to the low speed-reduction ratio power transmission mode is performed, and the power transmission gear mechanism 52 is set to the low speed-reduction ratio power transmission mode.

### (5) Power Transmission Mode Switching Operation from the Low Speed-reduction Ratio Power Transmission Mode to the Power Transmission Cutoff Mode

On the contrary, when the power transmission mode is switched from the low speed-reduction ratio power transmission mode, shown in FIG. 7(b) to the state of power transmission cutoff mode, shown in FIG. 7(a), a rotating direction of the motor 32 is switched from that of the normal rotation to that of the reversed rotation. As a result, the power transmission between the spool 4 and the motor 32 is cut off by operation contrary to the above-described power transmission mode switching operation from the power transmission cutoff mode to the low speed-reduction ratio power transmission mode. The rotating direction of the motor 32 is a controlled direction of the motor rotation for switching the power transmission modes from the low speed-reduction ratio power transmission mode to the power transmission cutoff mode, and is corresponding to "a first rotating direction" and "a power transmission releasing direction" of the present invention.

### (6) Power Transmission Mode Switching Operation from the Low Speed-reduction Ratio Power Transmission Mode to the High Speed-reduction Ratio Power Transmission Mode

In the low speed-reduction ratio power transmission mode, shown in FIG. 7(b), when the slack of the seatbelt 3 is removed by rapid retracting operation for retracting the seatbelt 3 by the continuous normal rotation of the motor 32, a belt load as a belt retracting resistance of the spool 4 is increased. Then, the motor-current supplied to the motor 32 is increased by the increase of the belt load resulting in increasing of the rotation torque of the motor 32. As a result, the force of the clutch gear shaft 44 for pressing the clutch arm 47 is increased, and when the torque for rotating the clutch arm 47 in the counterclockwise direction caused by the force, mentioned above exceeds the torque for rotating the clutch arm 47 in the clockwise direction caused by the spring 48, the clutch arm 47 is rotated in the counterclockwise direction as shown in FIG. 7(c). Then, because the corner portion 47j of the clutch arm 47 moves in an upward direction, i.e., the direction to be separated from the pressing portion 50d of the stopper spring 50, the pressing portion 50d of the stopper spring 50 also moves in the upward direction. In addition, when the pressing portion 50d of the stopper spring 50 contacts the clutch gear shaft 44 resulting from the moving operation of the pressing portion 50d of the stopper spring 50 in the upward direction, the corner portion 47j of the clutch arm 47 is separated from the pressing portion 50d of the stopper spring 50.

Further, the pressing force of the clutch arm 47 for pressing the projecting portion 49c caused by the spring 48 is brought to be weaker than the pressing force of the pressing portion 49c for pressing the clutch arm 47 in a reversed direction caused by the stopper spring 50. This is because the clutch arm 47 is rotated in the counterclockwise direction. Then, the clutch pawl 49 is rotated in a clockwise direction by the stopper spring 50 and the hooking pick 49b is brought to a position to be able to hook on the ratchet teeth 30c of the internal gear 30. However, when the motor 32 is rotating in the normal rotation, because the internal gear 30 is rotating in the counterclockwise direction, the hooking pick 49b and the ratchet gear 30c are not engaged with each other.

When the clutch arm 47 continues to rotate in the counterclockwise direction, the projecting portion 49c of the clutch pawl 49 is separated from the internal peripheral edge of the pawl limiting hole 47g of the clutch arm 47 as shown in FIG. 7(d), and because the clutch gear shaft 44 contacts the left ends of the guide holes 38a and 38b, the clutch gear shaft 44 stops to move. Then, the rotation of the clutch arm 47 in the counterclockwise direction is stopped and the clutch gear shaft 44 is engaged with the engaging concave 47f.

When the motor-current value detected by the motor-current detection meter 69 exceeds a preset current value, which is a threshold value, the control device once stops the rotation of the motor 32 and then rotates the same in the reversed direction. Then, because the first and the second connecting gear 41 and 42 are rotated in a direction contrary to the above-described direction, i.e., the counterclockwise direction as shown in FIG. 7(e), the internal gear 30 is rotated in the counterclockwise direction and thereby, the hooking pick 49b of the clutch pawl 49 is engaged with the ratchet teeth 30c of the internal gear 30. Thereafter, the clutch spring 45 is also rotated in the counterclockwise direction and the clutch gear shaft 44 moves along the guide holes 38a and 39c to be separated from the clutch arm 41 and is separated from the engaging concave 47f. When the clutch gear shaft 44 is separated from the engaging concave 47f, the clutch gear 43 moves in a direction to be separated from the carrier gear 31, and the engagement of the clutch gear 43 with the carrier gear 31 is released. Further, when the clutch gear shaft 44 is separated from the engaging concave 47f, the pressing force for rotating the clutch arm 47 in the counterclockwise direction is brought to be weak. As a result, the clutch arm 47 is rotated in the clockwise direction by the spring 48, and the internal peripheral edge of the pawl limiting hole 47g contacts the projection shaft 49c of the clutch pawl 49. At this moment, even when the internal peripheral edge of the pawl limiting hole 47g contacts the projection shaft 49c of the clutch pawl 49, the clutch arm 47 is not further rotated in the clockwise direction and stops at this position. This is because the hooking pick 49b of the clutch pawl 49 is engaged with the ratchet teeth 30c of the internal gear 30.

Thus, the power transmission mode switching operation of the power transmission gear mechanism 52 from the low speed-reduction ratio power transmission mode to the high speed-reduction ratio power transmission mode is performed and the power transmission mode of the power transmission gear mechanism 52 is set to the high speed-reduction ratio power transmission mode. Further, in the high speed-reduction ratio power transmission mode, the clutch gear shaft 44 continues to move and contacts the right ends of the guide holes 38a and 39c and stops, as shown in FIG. 7(f), and as a result, the clutch gear shaft 44, the clutch gear 43, and the clutch spring 45 return to the initial position together.

Furthermore, the power transmission gear mechanism 52 of the present embodiment is composed of the gear 19, the sun gear 20, the planet gear 25, the first connecting gear 41, the second connecting gear 42, and a driven device including the clutch gear 43 or the like (corresponding to a driven device in the present invention) between the motor gear 35 serving as a drive gear of a side of the motor 32 (constitutes a drive gear in the present invention) and the carrier 13 serving as a driven gear of a side of the spool 4 (constitutes a driven gear in the present invention), as described above. The driven device is configured to transmit the rotating force of the motor gear 35 to the carrier 13, and to switch the rotating directions of the carrier 13, when rotating in a predetermined rotating direction (a direction of the normal rotation or a direction of the reversed rotation) to be contrary to each other between the low speed-reduction ratio power transmission mode and the high speed-reduction ratio power transmission mode.

### (7) Power Transmission Mode Switching Operation from the High Speed-reduction Ratio Power Transmission Mode (to the Low Speed-reduction Ratio Power Transmission Mode) to the power transmission cutoff mode

When the power transmission mode is switched from the high speed-reduction ratio power transmission mode, shown in FIG. 7(f), to the power transmission cutoff mode, shown in FIG. 7(a), the rotating direction of the motor 32 is switched from the reversed rotation to the normal rotation, first. As a result, by operation contrary to the aforementioned power transmission mode switching operation for switching the power transmission modes from the aforementioned low speed reduction ratio power transmission mode to the high speed-reduction power transmission mode, the power transmission mode is switched from the high speed-reduction ratio power transmission mode to the low speed-reduction ratio power transmission mode, shown in FIG. 7(b). The rotating direction of the motor 32 is the controlled direction of the motor rotation in which the high speed-reduction ratio power transmission mode is released and the power transmission mode is being transferred, and is corresponding to "the second rotating direction contrary to the first rotating direction" and "the power transmission releasing direction" of the present invention. In addition, by further switching the rotating directions of the motor 32 from that of the low speed-reduction ratio power transmission mode, shown in FIG. 7(b), i.e., from normal rotation to the reversed rotation, the power transmission between the spool 4 and the motor 32 is cutoff and the power transmission mode is switched to that of the power transmission cutoff mode, shown in FIG. 7(a).

Thus, a setting operation of the power transmission gear mechanism 52 in the present embodiment is switched by the rotation control of the motor 32 that is performed by the ECU 68.
In concrete terms, relevant to the low speed-reduction ratio power transmission mode, while the power transmission mode is switched from the power transmission cutoff mode to the low speed-reduction ratio power transmission mode by controlling the rotating direction of the motor 32 to that of the normal rotation, and the low speed-reduction ratio power transmission mode is being continued, the power transmission mode is switched from the low speed-reduction ratio power transmission mode to the power transmission cutoff mode by controlling the rotating direction of the motor 32 to that of the reversed rotation, and low speed-reduction ratio power transmission mode is released.
Further, relevant to the high speed-reduction ratio power transmission mode, while the low speed-reduction ratio power transmission mode is switched to the high speed-reduction ratio power transmission mode by controlling the rotating direction of the motor 32 to the reversed rotation, and the high speed-reduction ratio power transmission mode is being continued, the power transmission mode is switched from the high speed-reduction ratio power transmission mode to the low speed-reduction ratio power transmission mode by controlling the rotating direction of the motor 32 to that of the normal rotation, and the high speed-reduction ratio power transmission mode is released.

In the seatbelt retractor having a configuration in which the setting of the power transmission gear mechanism 52 is switched by switching the rotating directions of the motor 32, the transmitting state of the power transmission gear mechanism 52 is uncertain when the clutch-releasing operation is performed, and therefore, a desired direction of the motor 32 controlled to be rotated is uncertain. In such a case, there is a problem in which the desired clutch-releasing operation cannot be performed. Further, for example, even when a clutch is already turned off (power transmission released-state), the motor 32 is continuously controlled to be rotated and thereby, there is a possibility of unnecessary rotation of the motor 32 resulting in occurring noise.
To solve the above-described problems, the ECU 68 judges the transmitting state when the clutch-releasing operation is performed, and the seatbelt retractor 1 of the present embodiment is configured to start the clutch-releasing operation at a best mode on the basis of the judged result.

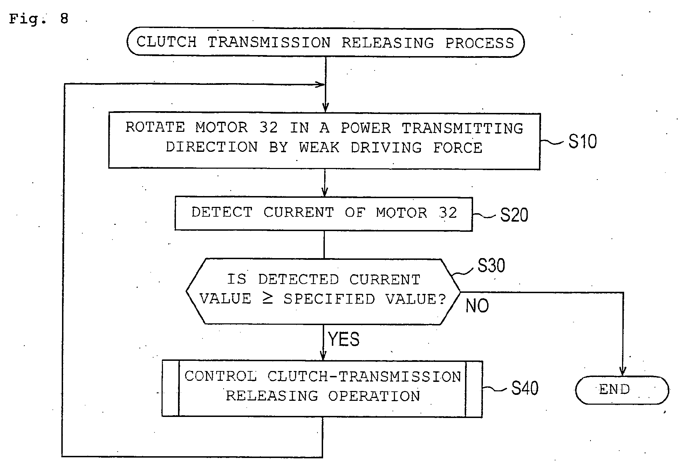

Here, "a clutch-releasing process (power transmission releasing process)" of the present embodiment in which the configuration is concretely described, will be explained referring to FIG. 8. The clutch-releasing process is performed by the ECU 68.
In the clutch-releasing process, shown in FIG. 8, first, the motor 32 is controlled to be rotated in a mode such that the transmitting state can be judged, that is, the motor 32 is controlled to be rotated in a mode to be rotated by a weak driving force to an extent such that the transmitting state is not switched, in Step S10. The control operation for the rotation of the motor 32 corresponds to "the control operation for the rotation in a transmitting state judging mode" of the present invention.

Further, the motor-current value at a time when the motor 32 is rotated in Step S10 is detected, in Step S20. The motor-current value is detected by the motor-current detection meter 69, shown in FIG. 2.

The motor-current value detected in Step S20 and the pre-specified value (the threshold value) is compared, in Step S30. In concrete terms, when the motor-current value detected in Step S20 is equal to or greater than the pre-specified value, the ETC 68 judges that a motor load is relatively heavy and the clutch is in a state of being turned on (the low speed-reduction ratio power transmission mode or the high speed-reduction ratio power transmission mode), and when the motor-current value is less than the pre-specified value, the ETC 68 judges that the motor load is relatively light and the clutch is in a state of being turned off (the power transmission cutoff mode). That is, in the present embodiment, the motor-current detection meter 69 is a detection device for detecting information relevant to the motor load of the motor 32, and is corresponding to "the detection device" in the present invention.

Further, when the ETC 68 judges that the clutch is being turned on (YES, in Step S30), the ETC 68 performs control operation for a clutch-releasing process in Step S40, and when the ETC 68 judges that the clutch is being tuned off (NO, in Step S30), the ETC 68 completes the clutch-releasing process straight and continues the power transmission cutoff mode. In the control operation for the clutch-releasing process in Step S40, the ETC 68 judges whether the motor-current value detected in Step S20 is a relatively far smaller value corresponding to the low speed-reduction ratio power transmission mode, or a relatively large value corresponding to the high speed-reduction ratio power transmission mode, first. Then, when the ETC 68 judges that the result is the low speed-reduction ratio power transmission mode, the ETC 68 performs control operation for the motor 32 to rotate in the direction of reversed rotation, and performs the releasing operation for the low speed-reduction ratio power transmission mode, and when the ETC 68 judges that the result is the high speed-reduction ratio power transmission mode, the ETC 68 performs control operation for the motor 32 to rotate in the direction of normal rotation, and performs the releasing operation for the high speed-reduction ratio power transmission mode.

Thus, in the present embodiment, the ETC 68 switches the power transmission gear mechanism 52 among the low speed-reduction ratio power transmission mode, the high speed-reduction ratio power transmission mode, and the power transmission cutoff mode. In addition, the ETC 68 releases the low speed-reduction ratio power transmission mode by performing control operation for the motor 32 to rotate in the reversed direction, and releases the high speed-reduction ratio power transmission mode by performing control operation for the motor 32 to rotate in the direction of the normal rotation. Further, when the power transmission releasing operation is performed, the ETC 68 performs control operation for the motor 32 to rotate in the transmitting state judging mode. Furthermore, the ETC 68 judges the transmitting state of the power transmission gear mechanism 52 on the basis of the information detected by the motor-current detection meter 69 at a time when the motor 32 is controlled to be rotated. Moreover, the ETC 68 is configured to perform control operation for the motor 32 to rotate in the reversed direction when judging the power transmission gear mechanism 52 is in the low speed-reduction ratio power transmission mode, and to control the motor 32 to rotate in the direction of normal rotation when judging the power transmission gear mechanism 52 is in the high speed-reduction ratio power transmission mode, and to maintain the power transmission cutoff mode when judging the power transmission gear mechanism 52 is in the power transmission cutoff mode.

By adopting the thus configured clutch-releasing process, the clutch-releasing operation is brought to be able to perform the desired mode that matches with the transmitting state of the power transmission gear mechanism 52. In addition, for example, the motor 32 is prevented from being controlled to continue rotation even when the clutch is already in the state of being turned off (in the state of power transmission cutoff mode) and the noise caused by unnecessary rotation of the motor is prevented from occurring.

Further, below described seven belt modes of the seatbelt 3 are set in the seatbelt retractor in the present embodiment. In this case, the setting operation of each of the belt modes is performed by controlling the motor 32 by a motor control device.

### (1) Belt Storage Mode

The belt storage mode is a belt mode of a state in which the seatbelt 3 is not used and is completely retracted by the spool 4. In the belt storage mode, the seatbelt retractor 1 is set to a state in which the motor 32 is not rotated and the power transmission gear mechanism 52 is in the power transmission cutoff mode. Further, the motor 32 has no electric power consumption.

### (2) Belt Withdrawal Mode

The belt withdrawal mode is a belt mode in which the seatbelt 3 is withdrawn from the spool 4 so that the occupant C wears the seatbelt 3. Similarly, in the belt withdrawal mode, the seatbelt retractor 1 is set to the state in which the power transmission gear mechanism 52 is in the power transmission cutoff mode. As a result, the seatbelt 3 can be withdrawn by weak force. Further, the motor 32 is not rotated and the motor 32 also has no electric power consumption.

### (3) Belt Retracting Mode for Fitting

The belt retracting mode for fitting is a belt mode in which the excessively withdrawn seatbelt 3 is retracted for fitting on the occupant C after the seatbelt 3 is withdrawn and the tongue is inserted and hooked with the buckle, causing the buckle switch to be turned on, or in which the withdrawn seatbelt 3 is retracted when the seated occupant C has once moved after being seated on a regular position, causing the seatbelt 3 to be withdrawn in a predetermined amount, and again get back to be seated on the regular position of the motor vehicle seat when the seatbelt 3 is in a state of normal wearing (At this moment, the buckle switch is in a state of being turned on.). In the belt retracting mode for fitting, the seatbelt retractor 1 is set to a state in which the motor 32 is driven in the belt retracting direction and the power transmission gear mechanism 52 is set to the low speed-reduction ratio transmission mode. Accordingly, the seatbelt 3 is rapidly retracted by low torque and is worn by the occupant C in a state of being fit thereon by stopping the motor 32 when a predetermined slight belt tension force occurs.

### (4) Normal Wearing Mode (Comfort Mode)

The normal wearing mode (comfort mode) is a belt mode in a normal wearing state of the seatbelt 3 which is set after the belt retracting for fitting is brought to completion. In the normal wearing mode, the seatbelt retractor 1 is set to a state in which the motor 32 is not driven and the power transmission gear mechanism 52 is set to the power transmission cutoff mode. As a result, because only slight belt tension force occurs at the seatbelt 3, the occupant C does not feel oppression due to wearing of the seatbelt 3. In addition the motor 32 also has no electric power consumption.

### (5) Warning Mode

The warning mode is a belt mode in which the seatbelt retractor 1 repeats the retracting operation of the seatbelt 3 for a predetermined number of times to give a warning to the occupant C when a doze of the occupant C while driving the motor vehicle is detected, or when an impediment or the like ahead in the direction of travel of the motor vehicle is detectedin the normal wearing mode. In the warning mode, the seatbelt retractor 1 is set in a manner such that the motor 32 is repeatedly driven. Therefore, relatively strong belt tension force (weaker than belt tension force of an emergency mode, described later) and slight belt tension force of the seatbelt 3 are alternately and repeatedly applied to the occupant C, and as a result, the driver is forced to pay attention to his or her doze and the impediment ahead in the direction of travel of the motor vehicle.

### (6) Emergency Mode

The emergency mode is a belt mode that is set when there is an enormous possibility that the motor vehicle collides with the impediment or the like when traveling in the normal wearing mode and includes the following two steps.

### (I) Early Stage

At the early stage of the emergency mode, the seatbelt retractor 1 is set in a manner that the motor 32 is rotated in the direction of normal rotation. Then, the power transmission gear mechanism 52 is switched from the power transmission cutoff mode to the low speed-reduction ratio power transmission mode. Accordingly, the seatbelt 3 is rapidly retracted at a low torque and the slack of the seatbelt 3 is rapidly removed.

### (II) Late Stage

When the slack of the seatbelt 3 is removed at the aforementioned early stage, the emergency mode proceeds to the late stage, being continued from the early stage. At the late stage, the tension force of the seatbelt 3, i.e., the belt load substantially increases and the motor-current value is thereby increased. When the motor-current value detected by the motor-current detection meter 69 is increased up to the preset current value, the motor 32 rotates in the reversed direction after stopping. Then, the power transmission gear mechanism 52 is switched from the low speed-reduction ratio power transmission mode to the high speed-reduction ratio power transmission mode. Thereby, the seatbelt 3 is retracted at a high torque and the occupant C is kept under restraint under extremely strong belt tension.

### (7) Belt Retracting Mode for Storage

The belt retracting mode for storage is a belt mode in which when the tongue is pulled out from the buckle and the buckle switch is turned off so as to release wearing operation of the seatbelt 3, the seatbelt 3 is completely retracted to be stored. In the belt retracting mode for storage, because the control device rotates the motor 32 in the direction of normal rotation, the power transmission gear mechanism 52 is set to be in the low speed-reduction ratio power transmission mode. As a result, the withdrawn seatbelt 3 is rapidly retracted by the low torque.
In addition, the motor 32 is stopped when the seatbelt 3 is completely retracted and predetermined slight belt tension force occurs. Continuously, the power transmission gear mechanism 52 is switched from the low speed-reduction ratio power transmission mode to the power transmission cutoff mode by the slightly reversed rotation of the motor 32. Thereafter, the motor 32 is stopped and the seatbelt 3 is brought to be in the belt storage mode.

With regard to the belt retracting mode for storage in the present embodiment, the seatbelt retractor 1 is configured to perform control operation using a detection sensor (detection sensor 54 in FIG. 2) in order to increase reliability relevant to the storing operation for the seatbelt 3 by solving various kinds of problems such as that the seatbelt 3 is not stored even when the seatbelt 3 is required to be stored, and is kept in a state of being withdrawn, or the storing operation for the seatbelt 3 is started even when the seatbelt 3 is in the middle of being worn by the occupant C and is not required to be stored.

In concrete terms, the control device (the ECU 68, shown in FIGs. 1 and 2) judges whether the seatbelt 3 is in an appropriate state to start storing operation on the basis of information (existence or absence of the rotating operation, a rotating angle, a rotating direction, a rotating speed, an amount of rotation, or the like) relevant to the rotation of the spool 4, directly detected by the detection sensor 54. Then, the ECU 68 performs the control operation for driving the motor 32 in the belt retracting direction when the seatbelt 3 is judged to be in the appropriate state to start storing operation, and starts performing storing operation for the seatbelt 3. As a condition to start storing operation for the seatbelt 3, for example, a below mentioned "first starting condition for storing" to a "third starting condition for storing" are used. When at least one of the starting conditions for storing is satisfied, the storing operation for the seatbelt 3 is started. As described in the present embodiment, the information of rotating operation of the spool 4 can be easily detected by detecting the information of rotating operation of the spool 4 per se by the detection sensor 54.

As the first starting condition for storing, it is listed that the state in which the rotating operation of the spool 4 is stopped after a state of the buckle switch 66a is changed from being turned on to being turned off is detected by the detection sensor 54. In this case, the state is that even though the occupant C has performed the releasing operation for the seatbelt 3, the storing operation for the seatbelt 3 is not performed, and the storing operation for the seatbelt 3 is judged to be appropriate.
Further, as the second starting condition for storing, it is listed that the state in which the spool 4 is rotated equal to or more than the specified rotation angle, which is previously determined, in a state that the buckle switch 66a is turned off and the motor 32 is stopped, and thereafter the rotation of the spool 4 is again stopped is detected. In this case, the state is that the tongue 62 is not inserted and engaged with the buckle 66 when the occupant C withdraws the seatbelt 3 and the operation is completed is detected. Therefore, the storing operation for the seatbelt 3 is judged to be appropriate.
Furthermore, as the third starting condition for storing, it is listed that the state in which the rotation of the spool 4 is stopped after the door of the motor vehicle in a closed state is opened while the buckle switch 66a is turned off is detected. In this case, the state is that the occupant C is getting off the motor vehicle after performing releasing operation for the seatbelt 3. Therefore, the storing operation for the seatbelt 3 is judged to be appropriate.

As described above, according to the seatbelt retractor 1 of the present embodiment, the ECU 68 judges the transmitting state when the clutch releasing operation is performed, and the clutch releasing operation is started on the basis of the judged result and is started in the best mode. Therefore, the clutch releasing operation can be performed in the desired mode that matches with the transmitting state of the power transmission gear mechanism 52. Further, for example, the motor 32 is prevented from being controlled to continue rotation even when the clutch is already in the state of being turned off (in the state of power transmission cutoff mode) and the noise caused by unnecessary rotation of the motor is prevented from occurring.
Specifically, in the present embodiment, the power transmission gear mechanism 52 can increase the reliability relevant to the power transmission releasing operation by configuring the power transmission gear mechanism 52 to include, at least the drive gear of the motor 32 side, the driven gear of the spool 4 side, and a driven device intervening between the drive gear and the driven gear.

Furthermore, according to the seatbelt retractor 1 of the present embodiment, the storing operation for the seatbelt 3 is started in the case when at least one of the first to third starting conditions for storing is satisfied. Thereby, the reliability of the seatbelt retractor 1 can be increased by solving the problems such as that the seatbelt 3 is not stored in the state of being kept withdrawn, or the seatbelt storing operation is started when the occupant C is in the middle of wearing the seatbelt 3. In addition, by setting the first to third starting condition for storing, a highly-detailed setting relevant to the starting condition for the seatbelt storing operation is brought to be possible.

Still further, according to the thus configured seatbelt retractor 1 of the present embodiment, because the power transmission gear mechanism 52 is set to have two power transmission paths, i.e., the low speed-reduction ratio power transmission mode composed of a high speed and low torque power transmission path, and the high speed-reduction ratio power transmission mode composed of a low speed and high torque power transmission path, two belt-retracting capabilities, i.e., a rapid belt retracting operation for removing the slack of the seatbelt 3, performed by the low speed-reduction power transmission mode, and a belt retracting operation with high torque for keeping the occupant C under restraint, performed by the high speed-reduction ratio power transmission mode are realized.

In addition, because the two power transmission paths are set, the rotation torque of the motor 32 can be efficiently transmitted to the spool 4. Therefore, these two retracting capabilities can be securely realized within limited power consumption. Specifically, because a belt retracting operation for keeping the occupant C under restraint by high torque is performed by the low speed and high torque power transmission path, the rotation torque of the motor 32 can be small sized compared to the conventional seatbelt retractor. As a result, the power consumption of the motor 32 can be decreased and a relatively smaller motor can be used. Therefore, the seatbelt retractor 1 can be made compact.

Further, because the aforementioned two retracting capabilities can be realized, a pre-tensioning function according to the rotation torque of the motor 32 can be added to the seatbelt retractor 1. As a result, the pre-tensioner using a reaction gas in the conventional seatbelt retractor is brought to be unnecessary and the manufacturing cost can be reduced.

Furthermore, because the power transmission gear mechanism 52 is set to the low speed-reduction ratio power transmission mode or the high speed-reduction ratio power transmission mode corresponding to the tension force of the seatbelt 3, the power transmission mode switching operation can be easily performed without controlling the rotation torque of the motor 32.
In addition, because the power transmission cutoff mode in which the rotation torque of the motor 32 is not transmitted to the spool 4 is set to the power transmission gear mechanism 52, the withdrawal of the seatbelt 3, the normal wearing of the seatbelt 3 without feeling the oppression, and the storing operation for the seatbelt 3 at a time of non-wearing state can be performed without being affected by the motor 32.

Further, because the storing and the retracting operation of the seatbelt 3 are performed by only the rotation torque of the motor 32, biasing force in the seatbelt retracting direction caused by a retracting device such as a spiral spring or the like that is constantly applied to the seatbelt 3 can be eliminated or reduced to be extremely small without using an additional module such as a tension reducer or the like.
In this case, even when the biasing force caused by the retracting device is set to be within the minimum strength which is necessary for the fitting operation performed when the occupant C wears the seatbelt 3, the storing and retracting operation for the seatbelt 3 can be securely performed by assisting the retracting operation for the seatbelt 3 by transmitting the rotation of the motor 32 to the spool 4 in the low speed-reduction ratio power transmission mode.

Incidentally, when the low speed reduction ratio power transmission mode and the high speed reduction ratio power transmission mode are switched without changing the rotating direction of the motor 32, a high-speed transmission clutch mechanism that switches the transmission mode from the low speed-reduction ratio power transmission mode to the high speed-reduction ratio power transmission mode, accurately correlating with the belt load is required to stabilize the seatbelt load at a time of the power transmission mode switching operation. In this case, such a high speed transmission clutch mechanism has to adopt a mechanism using a balance of force between a member that generates a load correlating with the belt load and the other member that tends to keep high speed transmission, opposing to the aforementioned member. However, such a mechanism has to be generally formed with a compound of a spring load to the member, friction between the members, action of force between the members and the like. Accordingly, the balancing relationship of the force is varied by mechanical fluctuation such as a coefficient of spring, a coefficient of friction, action angle of the force and the like. As a result, the belt load sometimes becomes unstable when the transmission mode is switched. In contrast, because the seatbelt retractor 1 of the present embodiment is configured to switch the power transmission mode between the low speed-reduction ratio power transmission mode and the high speed-reduction ratio power transmission mode by changing the rotating direction of the motor 32, it is easy to control the operation of the power transmission mode switching mechanism 53 for performing the power transmission mode switching operation among the power transmission cutoff mode, the low speed-reduction ratio power transmission mode, and the high speed-reduction ratio power transmission mode, and the structure of the power transmission mode switching mechanism 53 can be simplified. Accordingly, parameter of the aforementioned mechanical variation and fluctuation that occurs when the power transmission mode is switched can be reduced and the belt load occurring when the power transmission mode is switched can be stabilized. As a result, the switching operation for the power transmission modes can be more accurately and securely performed.

In addition, in a case when the power transmission mode is switched from the low speed-reduction ratio power transmission mode to the high speed-reduction ratio power transmission mode by changing the rotating direction of the motor 32, the parameter of the variation or the fluctuation that influences the belt load at the time when the power transmission mode is switched can be concentrated on the motor-current value corresponding to the motor torque. This is because the timing for switching the power transmission modes is determined by the motor-current value correlating with the belt load by utilizing an inversion per se of the rotating direction from the normal rotation to the reversed rotation for the switching operation for the low speed-reduction ratio power transmission mode from turning on to turning off. As a result, the switching operation for the power transmission modes can be more accurately and securely performed.

Further, the low speed and high torque transmission path can be formed into a compact size. This is because the mechanism for setting the high speed-reduction power transmission mode is configured to have the planetary, composed of the carrier 13, the sun gear 20, the planet gear 25, and the internal gear 30. Accordingly, even when the power transmission gear mechanism 52 is configured to have the low speed-reduction ratio power transmission mode or the high speed-reduction ratio power transmission mode, the seatbelt retractor 1 is efficiently suppressed to grow in size.

### (Another embodiment)

Furthermore, the present invention is not limited to the above-described embodiment and various kinds of application or variations are considerable. For example, each of the below described embodiments in which the aforementioned embodiment is applied can be also feasible.

In the above-mentioned embodiment, the seatbelt retractor 1 having the power transmission gear mechanism 52 which is set to either one of the low speed-reduction ratio power transmission mode or the high speed-reduction ratio power transmission mode, i.e., a so-called multistage clutch is described. However, the present invention can be also applied to a seatbelt retractor having a so-called single-stage clutch provided with one kind of power transmission mode. In this case, a control device (ECU 68, for example) switches a power transmission mechanism (the power transmission gear mechanism 52, for example) from a power transmitting state in which the spool 4 performs rotating operation (a state of rotating operation at a predetermined speed and by predetermined torque) to a power transmission released-state in which the power transmitting state is released. In addition, the control device performs control operation for the motor 32 to rotate in the transmitting state judging mode and judges the transmitting state of the power transmission mechanism on the basis of the information detected by the motor-current detection meter 69, when performing the power transmission releasing operation. Further, when the control device judges that the power transmission mechanism is in the power transmitting state, the control device performs control operation for the motor 32 to rotate in the power transmission releasing direction, and when the control device judges that the power transmission mechanism is in the power transmission released-state, the control device performs control operation for the power transmission mechanism to keep the power transmission released-state. This configuration of the seatbelt retractor is included in the configuration described in Claim 1. Further, according to this configuration of the seatbelt retractor, similar to the present embodiment, the motor 32 is prevented from being rotated by the control device even when the clutch is already turned off (power transmission released-state), and the noise that occurs due to the unnecessary rotation of the motor 32 is also prevented.

Further, in the above-described embodiment, the switching operation for the power transmission modes is performed by inversing the rotating direction of the motor 32 from the normal rotation to the reversed rotation when the motor-current value of the motor 32 exceeds the preset current value, which is the threshold value. However, the switching operation for the power transmission modes may be performed by inversing the rotating direction of the motor 32 from the normal rotation to the reversed rotation when the time length for which the motor-current value exceeds the preset current value exceeds the set length of time. According to the thus configured switching operation for the power transmission modes, a failure of the timing for inversing the rotating direction of the motor 32 can be suppressed and the power transmission mode switching operation can be far more accurately performed.

Furthermore, for the power transmission mode switching operation, a mechanism other than the power transmission mode switching mechanism 53 using two of the low torque and the high torque of the motor 32, namely, a mechanism such as for example, a solenoid or the like can be used.

More over, as described in the embodiment above, the rotation torque of the motor 32 is constant when the power transmission mode is being switched, however, in each of the belt retracting mode for fitting, the warning mode, the emergency mode, the belt retracting mode for storage, and the like, the rotation torque of the motor 32 can be controlled in a manner to be varied corresponding to each of the belt modes.

In addition, the configuration of the seatbelt retractor 1 mounted on a motor vehicle is described in the aforementioned embodiment, however, the seatbelt retractor of the present invention is used in the seatbelt apparatus mounted on conveyance or vehicles, such as for example, an automobile, an airplane, a vessel or the like that carries the occupant C, and is able to be preferably utilized for the seatbelt retractor 1 that retracts the seatbelt 3 for keeping the occupant under restraint and protecting the same, by a motor.
Further, the seatbelt apparatus of the present invention can be utilized for the seatbelt apparatus that efficiently keeps the occupant under restraint and protects the same that is carried by conveyance or vehicles, such as for example, an automobile, an airplane, a vessel or the like by utilizing the rotation torque of the motor and by controlling the retracting force of the spool in an accurate manner.

## Claims

1. A seatbelt retractor comprising:
a spool for retracting and withdrawing a seatbelt;
an electric motor;
a detection device for detecting information relevant to a motor load of the electric motor;
a power transmission mechanism for enabling the spool to retract and withdraw the seatbelt by transmitting a power of the electric motor to the spool; and
a control device for switching states of the power transmission mechanism between a power transmitting state wherein the spool rotates, and a power transmission released-state wherein the power transmitting state is released, by performing switching operation for rotating directions of the electric motor,
wherein, the control device performs control operation for the electric motor to rotate in a transmitting state judging mode when the control device performs a power transmission releasing operation, and wherein the control device judges the power transmitting state of the power transmission mechanism on the basis of information detected by the detection device when the control device performs the control operation for the electric motor to rotate, and when the control device judges the power transmission mechanism to be in a power transmitting state, the control device performs control operation for the electric motor to rotate in a power transmission releasing direction to release the power transmission, and when the control device judges the power transmission mechanism to be in a power transmission released-state, the control device performs control operation for the power transmission mechanism to keep the power transmission released-state.

2. A seatbelt retractor comprising:
a spool for retracting and withdrawing a seatbelt;
an electric motor;
a detection device for detecting information relevant to a motor load of the electric motor;
a power transmission mechanism for enabling the spool to retract and withdraw the seatbelt by transmitting a power of the electric motor to the spool; and
a control device for performing control operation for the power transmission mechanism to be switched among a first power transmitting state wherein the spool rotates at a relatively high speed and by relatively low torque, a second power transmitting state wherein the spool rotates at a relatively low speed and by relatively high torque, and a power transmission released-state wherein the first and second power transmitting states are released, and to release the first power transmitting state by performing the control operation for the electric motor to rotate in a first rotating direction, and to release the second transmitting state by performing the control operation for the electric motor to rotate in a second rotating direction being contrary to the first rotating direction,
wherein, the control device performs the control operation for the electric motor to rotate in a transmitting state judging mode when performing the power transmission releasing operation and judges the transmitting state of the power transmission mechanism on the basis of the information detected by the detection device when the control device performs the control operation for the electric motor to rotate, and wherein when the control device judges the power transmission mechanism to be in the first power transmitting state, the control device performs the control operation for the electric motor to rotate in the first rotating direction, and when the control device judges the power transmission mechanism to be in the second power transmitting state, the control device performs the control operation for the electric motor to rotate in the second rotating direction being contrary to the first rotating direction, and when the control device judges the power transmission mechanism to be in the power transmission released-state, the control device performs control operation for the power transmission mechanism to keep the power transmission released-state.

3. The seatbelt retractor according to Claim 2, wherein the power transmission mechanism comprises a drive gear at the electric motor side, a driven gear at the spool side, and a driven device intervening between the drive gear and the driven gear,
and wherein the driven device transmits a rotating force of the drive gear to the driven gear, and the rotating directions of the driven gear when the drive gear rotates in a predetermined rotating direction, are configured to be inverted with respect to each other for the first power transmission mode and the second power transmission mode.

4. A seatbelt apparatus comprising:
the seatbelt retractor according to any one of Claims 1 through 3; and
a seatbelt to be worn by an occupant seated on a motor vehicle seat, and to be retracted and withdrawn by a spool of the seatbelt retractor.

5. A motor vehicle having a seatbelt apparatus, wherein the seatbelt apparatus of Claim 4 is stored in a storage space thereof.
